# EUROPEAN PATENT APPLICATION

(11) **EP 1 980 470 A1**
(43) Date of publication of application: **15.10.2008**
(21) Application number: 07706423.6
(22) Date of filing: 09.01.2007
(51) Int. Cl.: B62D 1/18

(54) **STEERING COLUMN DEVICE**

(30) Priority: 17.01.2006 JP 2006008168
(71) Applicant: NSK Ltd., Tokyo 141-8560 (JP)
(72) Inventor: TOMARU, Masaki, Maebashi-Shi Gunma 371-8528 (JP); KAKITA, Hiroshi, Maebashi-Shi Gunma 371-8528 (JP)
(74) Representative: HOFFMANN EITLE
(86) International application number: PCT/JP2007/050076
(87) International publication number: WO 2007/083536

(57) **Abstract**

A tilt-telescopic steering column device where the weight and moment of the upper column side of the device acting on a tilt drive mechanism are maintained constant even if the adjustment distance of telescope position is longer. When an electric motor (5) turns, a worm (52) and a worm wheel (55) rotate to move a feeding screw (56) in the direction of the axis of a middle column (3). This causes, via a connection pin (41), an upper column (4) to pivot about a pivot pin (32) to adjust the tilt position of the upper column (4). Further, when an electric motor (6) turns, a worm (62) and a worm wheel (65) rotate to move a feeding screw (66) in the direction of the axis of a lower column (2). The middle column (3) moves in the direction of the axis of the lower column (2), with a bore (31) of the middle column (3) guided by an outer periphery (211) of a guidance tube (21) of the lower column (2). As a result, the telescope position is adjusted.

## Description

### FIELD OF THE INVENTION

The present invention relates to a steering column device and more particularly to a tilt-telescopic steering column device using the motive force of an actuator to adjust both a telescopic position and a tilt position of a steering wheel in response to a driving posture or physique of a driver.

### BACKGROUND OF THE INVENTION

An electrical tilt-telescopic steering column device is disclosed in JP-UM-A Hei04(1992)-119777 and is an example of a tilt-telescopic steering column device using the motive force of an electrical actuator to adjust both a telescopic position and a tilt position of a steering wheel.

The tilt-telescopic steering column device disclosed in JP-UM-A Hei04 (1992) -119777 has a telescopic drive mechanism and an actuator for telescopic motion on an upper column. A tilt position of the upper column can be adjusted with respect to a lower column by a tilt actuator and a tilt drive mechanism provided on the lower column.

Since the tilt-telescopic steering column device disclosed in JP-UM-A Hei04(1992)-119777 is provided with a telescopic drive mechanism and an actuator for telescopic motion on the upper column, when the adjustment distance of the telescopic position increases, the weight or moment from the upper column acting on the tilt drive mechanism increases proportional to the increase in the adjustment distance of the telescopic position.

The output or strength of the tilt actuator or the tilt drive mechanism is limited by the available space in the vehicle compartment in which the steering column device is disposed. This results in a limit on the weight or moment from the upper column acting on the tilt drive mechanism and thus it is difficult to lengthen the adjustment distance of the telescopic position.

### SUMMARY OF THE INVENTION

This invention has the object of providing a tilt-telescopic steering column device wherein the weight or moment of the upper column acting on the tilt drive mechanism is maintained to a fixed level even when the adjustment distance of the telescopic position increases.

This above problem has been solved with the means describedhereafter. In other words, according to a first aspect of this invention, a steering column device is characterized in having a lower column fixable to a vehicle body, a guidance tube formed on the lower column towards the vehicle rear, a middle column with a bore formed towards the vehicle front, the bore fitted to the outside of the guidance tube and capable of adjusting a telescopic position, an actuator for telescopic motion, the actuator provided on the lower column, a telescopic drive mechanism transmitting drive force of the actuator for telescopic motion to the middle column and moving the middle column in telescopic motion, an upper column pivoted on the middle column towards the rear of the vehicle and capable of tilting motion, a steering shaft with a steering wheel attached thereto towards the vehicle rear and rotatably pivoted to the upper column, an actuator for tilting motion provided on the middle column, and a tilt drive mechanism wherein the drive force of the actuator for tilting motion is transmitted to the upper column and the upper column is tilted.

A second aspect of this invention includes the steering column device according to the first aspect of this invention and is characterized in that the telescopic drive mechanism further comprises a feeder screw, the vehicle rearward end of the feeder screw being connected to the middle column and the feeder screw displacing along the axial line of the lower column in response to rotation of the actuator for telescopic motion.

A third aspect of this invention includes the steering column device according to the first aspect of this invention and is characterized in that the tilt drive mechanism further comprises a feeder screw, the vehicle rearward end of the screw being pivoted to the upper column and the feeder screw displacing along the axial line of the middle column in response to rotation of the actuator for tilt motion.

A fourth aspect of this invention includes the steering column device according the first aspect of this invention and is characterized in that the telescopic drive mechanism further comprises a feeder screw, the vehicle rearward end of the feeder screw being connected to the middle column and the feeder screw displacing along the axial line of the lower column in response to the rotation of the actuator for telescopic motion, and the tilt drive mechanism further comprises a feeder screw, the vehicle rearward end of the feeder screw being pivoted on the upper column and the feeder screw displacing along the axial line of the middle column in response to the rotation of the actuator for tilt motion.

A fifth aspect of this invention includes the steering column device according the any one of the first to the fourth aspects of this invention and is characterized in that the lower column, the middle column and the upper column are cast in aluminum.

A sixth aspect of this invention includes the steering column device according the any one of the first to the fourth aspects of this invention and is characterized in that a plurality of clearance elimination mechanisms are provided in the middle column, the clearance elimination mechanisms eliminating a sliding clearance between the bore of the middle column and the guidance tube of the lower column by pressing the outer periphery of the guidance tube of the lower column, and the position at which each clearance elimination mechanism presses the outer periphery of the guidance tube of the lower column has a different phase on the outer periphery of the guidance tube of the lower column.

A seventh aspect of this invention includes the steering column device according to the sixth aspect of this invention and is characterized in that an angle between adjacent clearance elimination mechanisms positioned to press the outer periphery of the guidance tube of the lower column is 90 degrees.

An eighth aspect of this invention includes the steering column device according to the sixth aspect of this invention and is characterized in that the clearance elimination mechanisms are positioned at respectively different positions along the axial line of the middle column.

According to a ninth aspect of this invention, the steering column device comprises a lower column fixable to a vehicle body, a movable column with a steering wheel rotatably mounted thereon, a drive mechanism displacing long the axial line of the movable column, a guidance tube provided in one of the lower column or the movable column, a bore guided by the guidance tube and provided in the other of the lower column or the movable column, and a clearance elimination mechanism provided at two different positions of different phase with respect to the bore.

A tenth aspect of this invention includes the steering column device according to the ninth aspect of this invention and is characterized in that the two clearance elimination mechanisms are provided at a relative phase difference of greater than or equal to 0 degrees and less than or equal to 120 degrees.

An eleventh aspect of this invention includes the steering column device according to the tenth aspect of this invention and is characterized in that the two clearance elimination mechanisms are provided at a relative phase difference of substantially 45 degrees.

A twelfth aspect of this invention includes the steering column device according to any one of the ninth to the eleventh aspects of this invention and is characterized in that the two clearance elimination mechanisms are provided at opposite right and left sides when the steering column device is mounted in the vehicle body.

A thirteenth aspect of this invention includes the steering column device according to the twelfth aspect of this invention and is characterized in that the two clearance elimination mechanisms are provided at symmetrical right and left positions when the steering column device is mounted in the vehicle body.

A fourteenth aspect of this invention includes the steering column device according to any one of the ninth to the eleventh aspects of this invention and is characterized in that the two clearance elimination mechanisms are provided on only the right side or the left side with reference to the center of the column when the steering column device is mounted in the vehicle body.

A fifteenth invention includes the steering column device according to any one of the ninth to the eleventh aspects of this invention and is characterized in that the two clearance elimination mechanisms are provided on only an upper side or a lower side with reference to the center of the column when the steering column device is mounted in the vehicle body.

A sixteenth aspect of this invention includes the steering column device according to any one of the ninth to the fifteenth aspect of this invention and is characterized in that the two clearance elimination mechanisms are staggered with respect to an axial direction of the column.

In the steering column device according to this invention, the middle column undergoes telescopic motion and has a tilt drive mechanism. The lower column is provided with a telescopic drive mechanism. Thus even when the adjustment distance of the telescopic position increases, the weight or moment of the upper column acting on the tilt drive mechanism is maintained to a fixed level.

Furthermore a bore in the middle column of the steering column device according to this invention is guided on an outer periphery of a guidance tube of the lower column and undergoes telescopic motion. Thus even when the adjustment distance of the telescopic position increases, since the weight on the middle column undergoing telescopic motion does not increase, there is no increase in the load acting on the telescopic drive mechanism and telescopic motion can be effected smoothly.

A clearance elimination mechanism according to this invention can prevent shaking in the steering device. However in addition, two clearance elimination mechanisms can be disposed in arbitrary phase positions substantially around the center line of the column and each clearance elimination mechanism staggered with respect to the other in an axial direction. Thus even when access is difficult due to vehicle body design, clearance adjustment operations are facilitated by selecting an orientation for the positions of the mechanisms.

### BRIEF DESCRIPTION OF THE DRAWINGS

FIG. 1 is an overall perspective view of a steering column device 101 according to this invention when mounted in a vehicle.

FIG. 2 is a front view of the main components of an embodiment of a steering column device 101 according to this invention.

FIG. 3 is a front view showing the steering column device 101 of FIG. 2 dismantled into a lower column and middle column.

FIG. 4 is a sectional view along the line A - A in FIG. 2.

FIG. 5 is a sectional view along the line B - B in FIG. 2.

FIG. 6 is a sectional view along the line C - C in FIG. 2.

FIG. 7 is a sectional view along the line D - D in FIG. 2.

FIG. 8 is an explanatory view showing a variation in the detailed structure of the clearance elimination mechanism 7.

FIGs. 9(1) and 9(2) are explanatory views showing an example of the position of clearance elimination mechanisms 7 staggered with a suitable angular phase and axial orientation.

FIGs. 10(1), 10(2) and 10(3) are explanatory views respectively showing other examples of the position of the clearance elimination mechanisms 7.

FIG. 11 is an explanatory view of another embodiment wherein the relationship of the guidance tube 21 and the bore 31 is varied.

### DETAILED DESCRIPTION OF THE PREFERRED EMBODIMENTS

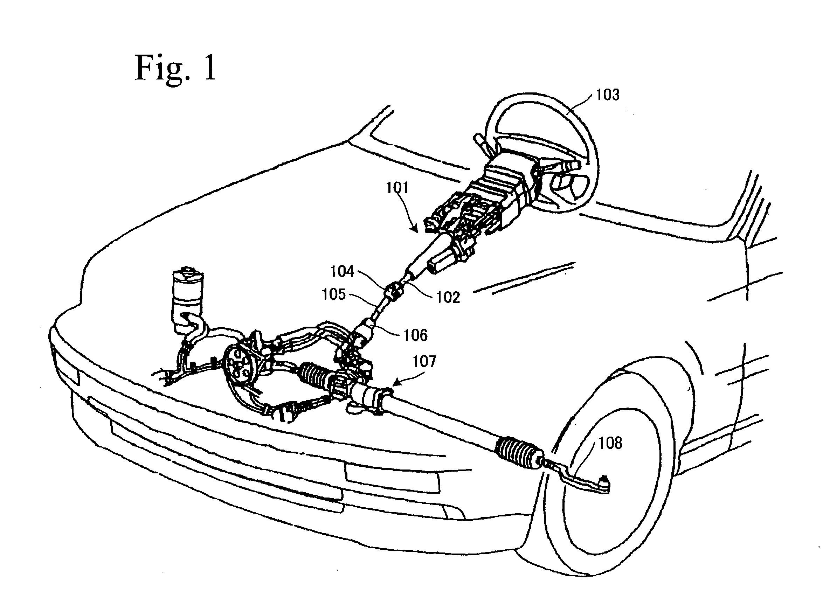

The invention will be described hereafter making reference to the drawings. Fig. 1 an overall perspective view of a steering column device 101 according to this invention mounted in a vehicle. The steering column device 101 is pivoted to rotate freely on a steering shaft 102. A steering wheel 103 is attached to one end (at vehicle body rear) of the steering shaft 102. A middle shaft 105 is connected via a universal joint 104 to the lower end (at vehicle body front) of the steering shaft 102.

A universal joint 106 is connected to the lower end of the middle shaft 105. A steering gear 107 comprising a rack and pinion mechanism for example is connected to the universal joint 106.

When a driver rotates the steering wheel 103, torque is transmitted to the steering gear 107 via the steering shaft 102, the universal joint 104, the middle shaft 105, and the universal joint 106. The rack and pinion mechanism displaces the tie rod 108 and it is possible to vary the steering angle of the vehicle wheels.

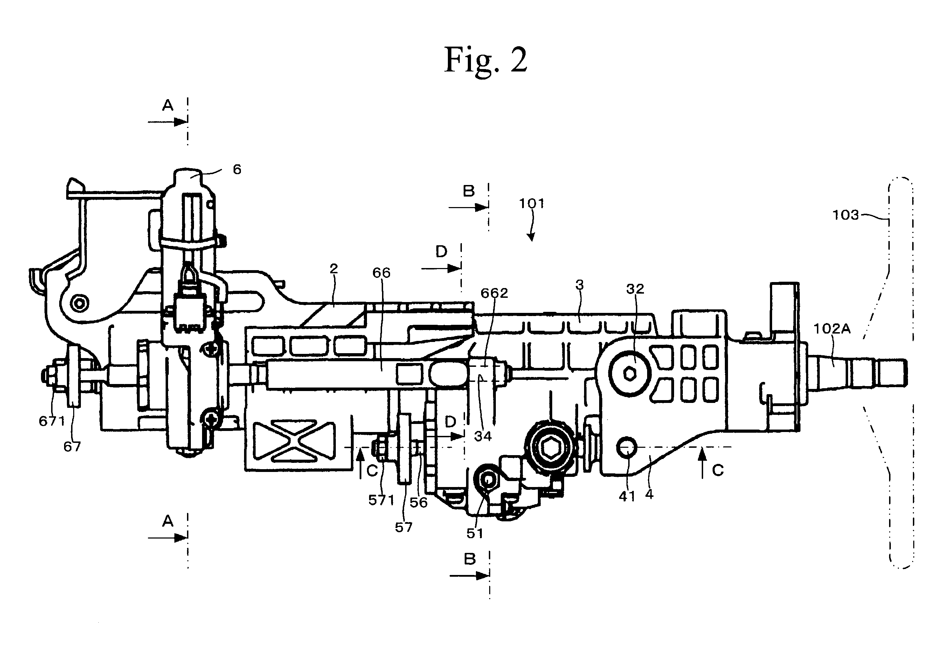

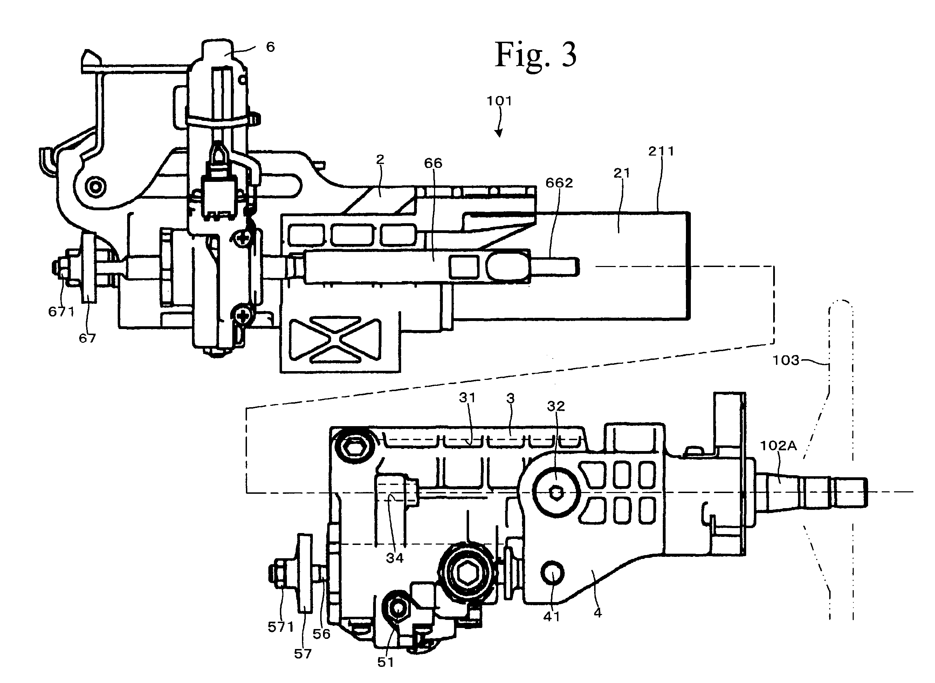

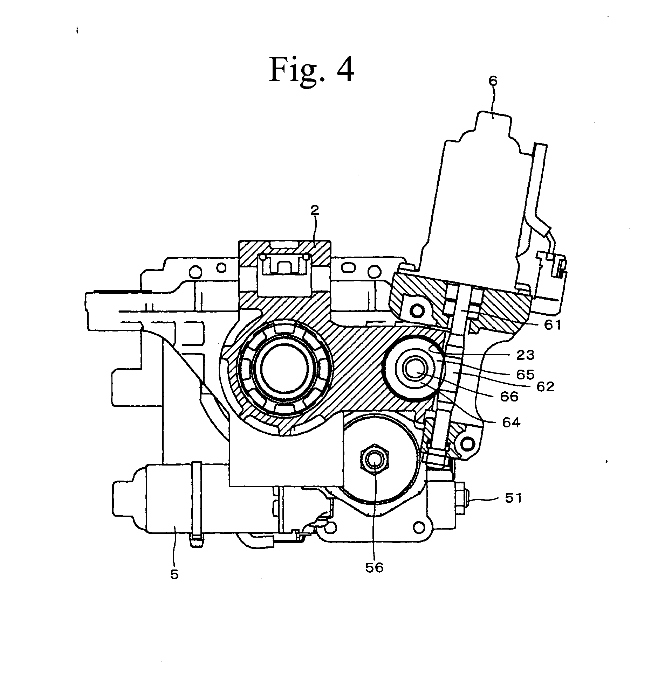

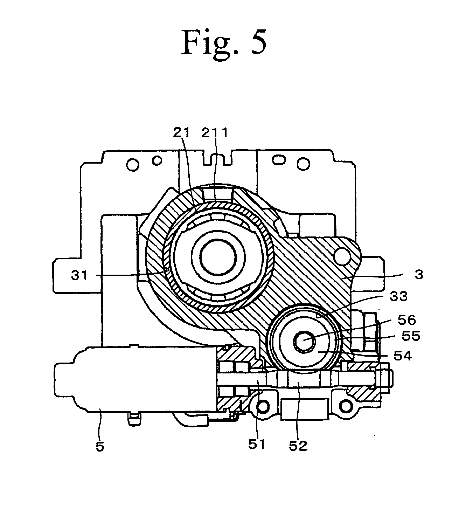

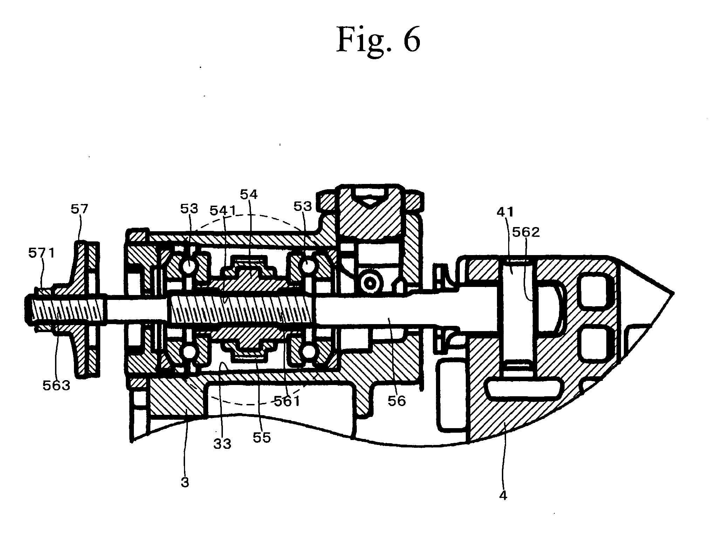

FIG. 2 is a front view of the main components of an embodiment of a steering column device 101 according to this invention. FIG. 3 is a front view showing the steering column device 101 in FIG. 2 dismantled into a lower column and middle column. FIG. 4 is a sectional view along the line A - A in FIG. 2. FIG. 5 is a sectional view along the line B - B in FIG. 2. FIG. 6 is a sectional view along the line C - C in FIG. 2.

As shown in Fig. 2 and Fig. 3, a steering column device 101 according to this invention comprises three elements: a lower column 2 mounted on the vehicle body (not shown), a middle column 3 fitted to the outside of the lower column 2 so that a tilt position is adjustable and an upper column 4 pivoted on the middle column so that a tilt position thereof is adjustable. The lower column 2, the middle column 3 and the upper column 4 are formed by cast aluminum in order to reduce weight and improve vibrational rigidity.

A cylindrical guidance tube 21 extending towards the vehicle rear is integrated with the lower column 2 towards the vehicle rear (right side of Fig. 2 and Fig. 3). A circular bore 31 is formed in the middle column 3 towards the vehicle front (left of Fig. 2 and Fig. 3). The bore 31 is fitted to the outer periphery 211 of the guidance tube 21 and is guided on the guidance tube 21 of the lower column 2. The middle column 3 moves parallel to the axial line of the lower column 2.

The upper column 4 is supported to pivot about a pivot pin 32 on the middle column 3 towards the vehicle rear in a plane parallel to the surface of the page in Fig. 2 and Fig. 3. An upper section 102A of the steering shaft is rotatably supported on the upper column 4. The steering wheel 103 mentioned above is attached to the upper section 102A of the steering shaft towards the vehicle rear. Using the axial line of the pivot pin 32 as a reference, the vehicle forward end of the upper section 102A of the steering shaft is connected by a universal joint (not shown) with the vehicle rearward end of the steering shaft 102 which is rotatably pivoted on a lower column 2 (refer to Fig. 1).

As shown in Fig. 2, Fig. 3, Fig. 5, Fig. 6, an electrical motor 5 (tilt actuator) is fixed below the middle column 3 in an orientation orthogonal to the axial line of the bore 31 of the middle column 3. A worm 52 is formed integrally in the output shaft 51 of the electrical motor 5.

A through hole 33 is formed in the middle column 3. The through hole 33 is parallel to the axial line of the bore 31 and inclines below the bore 31. Both ends of a hollow cylindrical nut 54 are rotatably supported in the through hole 33 by thrust bearings 53, 53 provided with spherical washers. A worm hole 55 is press fitted to the outer periphery of the nut 54 and a worm 52 is threadably engaged in the worm hole 55.

A female threaded portion 541 is formed on the inner periphery of the nut 54. A male threaded portion 561 formed on the outer periphery of a feeder screw 56 is engaged with the female threadedportion 541. A connection hole 562 is formed in the vehicle rearward end of the feeder screw 56 (right side of Fig. 2, Fig. 3 and Fig. 6). A connection pin 41 pressed fitted into the upper column 4 is fitted into the connection hole 562. Thus the vehicle rearward end of the feeder screw 56 can pivot on the connection pin 41 press fitted into the upper column 4.

A small diameter male threaded portion 563 is formed on the vehicle forward end of the feeder screw 56 (left side of Fig. 2, Fig. 3 and Fig. 6). A disc-shaped stopper 57 is screwed into the male threaded portion 563 and prevented from loosening by a lock nut 571.

When the electrical motor 5 rotates, the worm 52 and the worm hole 55 rotate. Thus the feeder screw 56 moves along the axial line of the middle column 3 and the upper column 4 pivots on the pivot pin 32 via the connection pin 41 and adjusts the tilt position of the upper column 4 (the steering wheel 103). The worm 52, the worm hole 55, the nut 54, the feeder screw 56 and the connection pin 41 comprise a tilt drive mechanism which transmits the drive power of the electrical motor 5 to the upper column 4 in order to tilt the upper column 4. The abutment of the end of the stopper 57 which moves towards the vehicle rear with the vehicle forward end of the middle column 3 limits the rearward movement of the end of the feeder screw 56.

The tilting motion of the upper column 4 is a circular motion about the pivot pin 32. Although the motion of the feeder screw 56 is linear, the feeder screw 56 is inclined towards the axial line of the middle column 3 by the thrust bearings 53, 53 which are provided with spherical washers so as to absorb the difference in the orbit between linear and circular motion.

As shown in Fig. 2, Fig. 3 and Fig. 4, the electrical motor 6 (telescopic actuator) is fixed in an inclining upper orientation (Fig. 4) and is orthogonal to the axial line of the guidance tube 21 of the lower column 2 on the side of the lower column 2 (the vertical direction in Fig. 2 and Fig. 3). A worm 62 is integrated with the output shaft 61 of the electrical motor 6.

A through hole 23 is formed on the side of the lower column 2 parallel to the axial line of the guidance tube 21. The through hole 23A is provided with a nut 64 rotatably supported by a thrust bearing (not shown) and a worm hole 65 press fitted onto the outer periphery of the nut 64. The worm 62 is threadably engaged with the worm hole 65.

A female threaded portion (not shown) is formed on the inner periphery of the nut 64. A male threaded portion (not shown) formed on the outer periphery of the feeder screw 66 is screwed into the female threaded portion. A connection shaft 662 is formed in the vehicle rearward end of the feeder screw 66 (right side of Fig. 2 and Fig. 3). The connection shaft 662 is fitted into the connection hole 34 formed in the middle column 3. The connection shaft 662 is fixed to the connection hole 34 by a set screw (not shown).

A small diameter male threaded portion (not shown) is formed on the vehicle forward end of the feeder screw 66 (left side of. Fig. 2 and Fig. 3). A disc shaped stopper 67 is threadably engaged with the male threaded portion and loosening of the stopper 67 is prevented by a lock nut 671.

When the electrical motor 6 rotates, the worm 62 and the worm wheel 65 rotate and the feeder screw 66 moves along the axial line of the lower column 2. The telescopic position of the middle column 3 (steering wheel 103) is adjusted by the bore 31 of the middle column 3 being guided in the outer periphery 211 of the guide tube 21 of the lower column 2 and moving along the axial line of the upper column 2. The worm 62, the worm hole 65, the nut 64 and the feeder screw 66 comprise a telescopic drive mechanism which transmits the drive power of the electrical motor 6 to the middle column 3 in order to displace the middle column 3 telescopically.

In the embodiments of the present invention, the tilt drive mechanism is disposed on the middle column 3 which is displaced telescopically. Thus even when the adjustment distance of the telescopic position increases, the weight or moment on the upper column 4 which acts on the tilt drive mechanism is maintained to a fixed level.

In the embodiments of the present invention, a structure is used wherein a bore 31 in the middle column 3 is guided in the outer periphery 211 of the guidance tube 21 of the lower column 2 and undergoes telescopic motion. Thus even when the adjustment distance of the telescopic position increases, the weight on the middle column 3 which undergoes telescopic motion does not increase and therefore there is no increase in the load acting on the telescopic drive mechanism and telescopic motion is effected smoothly.

In the embodiments of the present invention, a light-weight tilt drive mechanism with improved dynamic rigidity and static rigidity is obtained by integrating the tilt drive mechanism with the middle column 3 which is cast from aluminum.

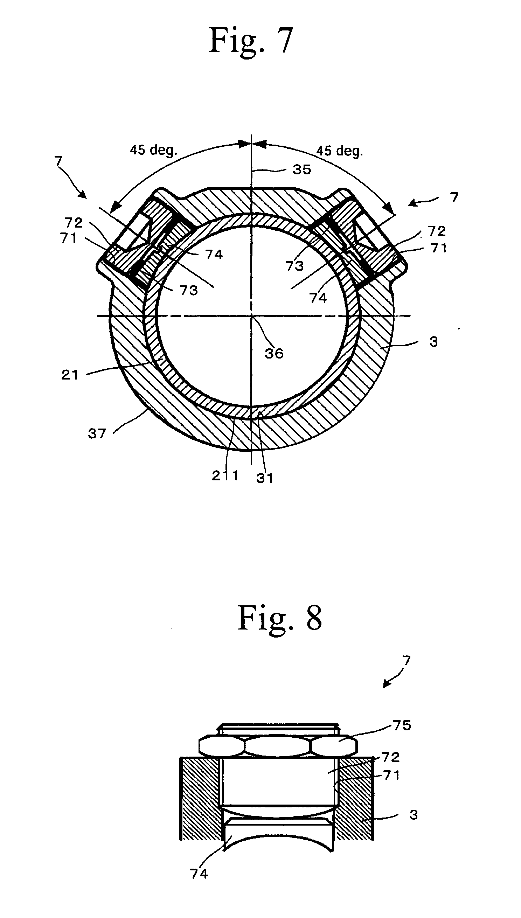

FIG. 7 is a sectional view along the line D - D in FIG. 2 which shows an example of a clearance eliminationmechanism and the disposition thereof. The clearance elimination mechanism is adapted to improve the rigidity of the steering column device 101 by eliminating the sliding clearance between the outer periphery 211 of the guidance tube 21 of the lower column 2 and the bore 31 of the middle column 3 and thus enables smooth adjustment of the telescopic position of the middle column 3.

As shown in Fig. 7, clearance elimination mechanisms 7, 7 of identical structure are provided on the middle column 3. The mechanisms 7, 7 are provided at identical positions with respect to an axial direction and are staggered with a phase of 45 degrees (a total of 90 degrees) on the right and the left of a perpendicular line 35 passing through the center 36 of the bore 31 of the middle column 3.

Female threaded portions 71, 71 are formed on the middle column 3 so as to pass from the outer periphery 37 of the middle column 3 through the bore 31. Adjustment screws 72, 72 are screwed into the female threaded portions 71, 71. The adjustment screws 72, 72 press a pad 74 onto the outer periphery 211 of the bore 31 via a coned disk spring 73. The pad 74 is formed in a cylindrical shape from a synthetic resin with a small coefficient of friction. The face abutting with the outer periphery 211 of the guidance tube 21 is formed as a circular arc of the same curvature as the outer periphery 211.

Sliding clearances between the bore 31 of the middle column 3 and the outer periphery 211 of the guidance tube 21 of the lower column 2 are eliminated by suitable adjustment of the level of threadable engagement of the adjustment screws 72, 72. In this manner, the rigidity of the steering column device 101 can be increased and it is possible to effect smooth adjustment of the telescopic position of the middle column 3.

FIG. 8 is an explanatory view showing a variation in the detailed structure of the clearance elimination mechanism 7. In this example, the coned disk spring 73 in the clearance elimination mechanism 7 shown in Fig. 7 is omitted. As a result, since the adjustment screw 72 is liable to loosen as a result of vibration of the vehicle body, a clamp nut 75 is provided to prevent loosening of the adjustment screw 72. Other aspects are the same as those described with respect to Fig. 7.

Shaking in all directions about the center 36 is prevented by disposing two clearance elimination mechanisms 7 with different phases about the center 36. Thus as long as the clearance elimination mechanisms 7 are disposed at two positions of different phase, the positioning of the clearance elimination mechanisms 7 is not limited to the example showing disposition only on the upper side of the column in Fig. 7. However when only two clearance elimination mechanisms 7 are provided, an orientation is excluded in which the two mechanisms are separated by 180 degrees and facing each other as it does not prevent shaking in all directions. When a third clearance elimination mechanism 7 is provided, the above orientation is not excluded.

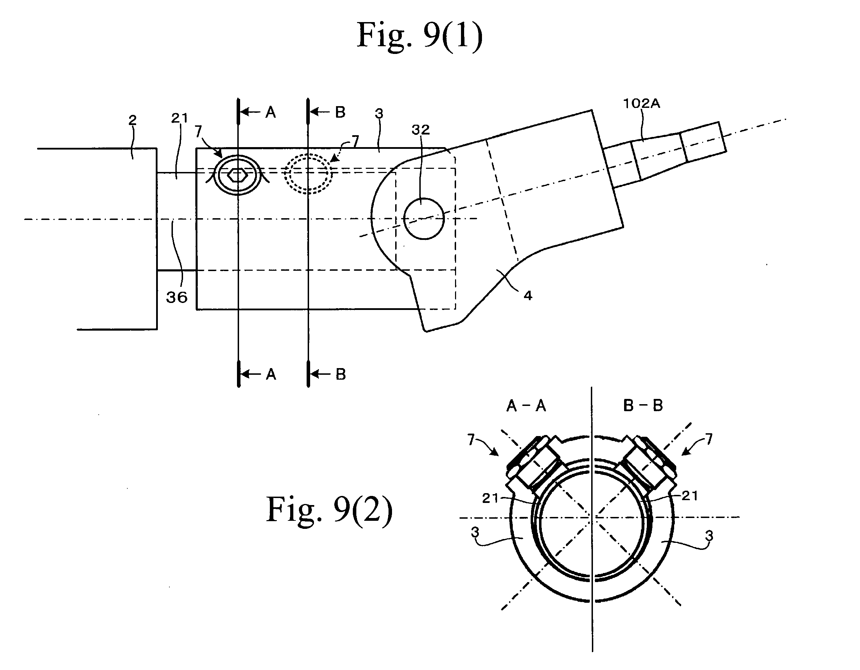

Several possible examples of the orientation of the clearance elimination mechanisms 7 are discussed hereafter. FIGs. 9(1) and 9(2) are explanatory views showing an example of the position of the clearance elimination mechanisms 7 staggered with a suitable angular phase and axial orientation. Fig. 9(1) is a schematic front view and Fig. 9(2) shows the respective halves in sectional views along the line A - A and the line B - B. As shown in Fig. 9(1), two clearance elimination mechanisms 7 are disposed at staggered positions along an axial direction (longitudinal direction) of the steering column device and as shown in Fig. 9(2), they are disposed a mutually different phase. Thus even when access is difficult due to vehicle body design, clearance adjustment operations are facilitated by selecting an orientation for the positioning of the mechanisms.

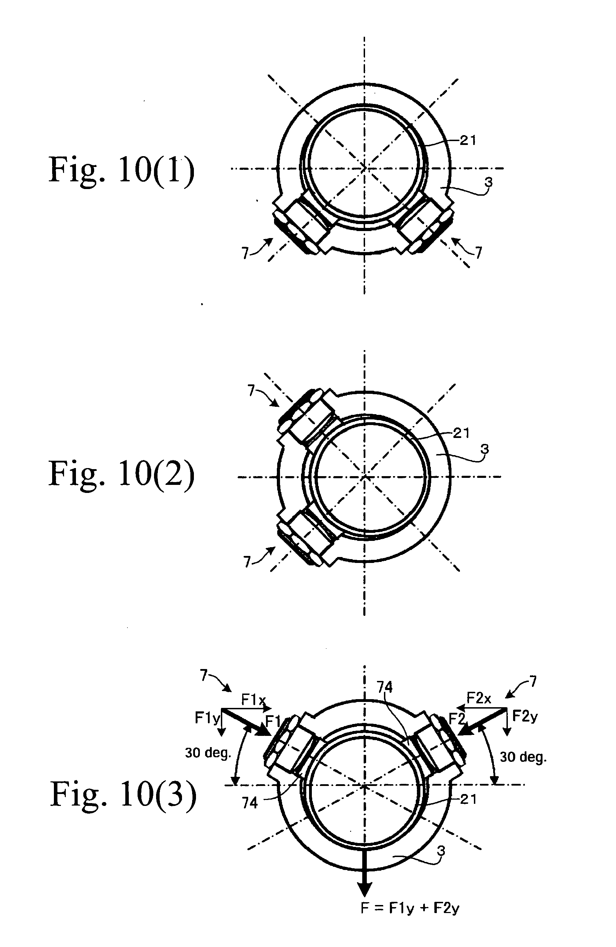

FIGs. 10(2), 10(2) and 10(3) show other examples of the disposition of the clearance elimination mechanisms 7. In Fig. 10(1), two clearance elimination mechanisms 7 are both disposed on the lower side of the steering column device. When access to the clearance elimination mechanisms 7 from above is problematic due to the positioning of the vehicle control panel in the vehicle body, clearance adjustment operations in the factory are facilitated by disposing the clearance elimination mechanisms 7 as shown in the example on the lower side of the steering column device.

As shown in Fig. 10(2), two clearance elimination mechanisms 7 are both disposed on either the right or the left side (the left side or the right side) of the steering column device. When other members of the vehicle body (for example, side walls, doors, shift lever etc) are already assembled and access from the left side or the right side to the two clearance elimination mechanisms 7 is problematic, clearance adjustment operations in the factory can be facilitated as shown in the example by disposing the two clearance elimination mechanisms 7 on either the right or the left of the steering column device.

The degree of deviation in the phase of the two clearance elimination mechanisms 7 may be selected to be an arbitrary angle other than those described above with respect to 180 degrees or 0 degrees (as shown in FIGs. 9(1) and 9(2), 0 degrees is possible if the deviation is in an axial direction). In particular as shown in Fig. 10(3), when the phase of each clearance elimination mechanism 7 is at least 30 degrees from the horizontal, that is to say, the deviation in the phase of the two clearance elimination mechanisms 7 is 120 degrees or less, the downward load of the steering column device is greater than the load on the pad 74 of the clearance elimination mechanisms 7. Thus it is possible to reduce the load on the pad 74. The pad 74 is liable to wear when it has a small contact surface area and it is constituted by synthetic resin. However wear on the pad 74 can be reduced by reducing the load.

The orientation of the two clearance elimination mechanisms 7 may not only be on opposite right and left sides or symmetrically disposed on the right and the left, but may also be on either the right or the left with respect to the center of the column or on either the top or the bottom with respect to the center of the column.

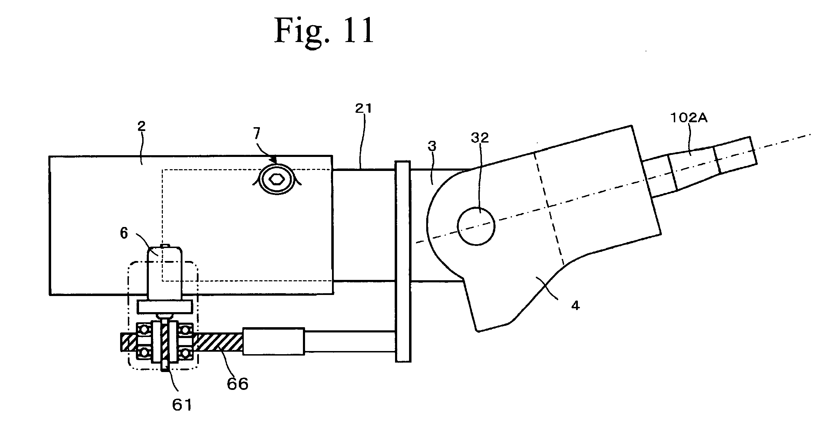

In the steering column device described above, the guidance tube 21 is disposed on the lower column 2 and the bore 31 provided in the middle column 3 is fitted to the guidance tube 21. However the steering column device as shown in Fig. 11 disposes the guidance tube 21 and the bore 31 in an opposite orientation to the above. In other words, the bore 31 is provided on the lower column 2 and the guidance tube 21 is provided on the middle column 3. The guidance tube 21 of the middle column 3 is fitted into the bore 31 of the lower column 2 so as to slide for telescopic motion. The clearance elimination mechanisms 7 above are not limited to application to the above type of steering column device and may be applied to a device with a telescopic function even when the same device does not have a tilt function. Since the operation and other structure of the steering column device shown in Fig. 11 is substantially similar, additional description has been omitted.

## Claims

1. A steering column device comprising:
a lower column fixable to a vehicle body;
a guidance tube formed on the lower column towards the vehicle rear;
a middle column with a bore formed towards the vehicle front, the bore fitted to the outside of the guidance tube and capable of adjusting a telescopic position;
an actuator for telescopic motion, the actuator provided on the lower column;
a telescopic drive mechanism transmitting drive force of the actuator for telescopic motion to the middle column and moving the middle column in telescopic motion;
an upper column pivoted on the middle column towards the rear of the vehicle and capable of tilting motion;
a steering shaft with a steering wheel attached thereto towards the vehicle rear and rotatably pivoted to the upper column;
an actuator for tilting motion provided on the middle column; and
a tilt drive mechanism wherein the drive force of the actuator for tilting motion is transmitted to the upper column and the upper column is tilted.

2. The steering column device according to claim 1, wherein the telescopic drive mechanism further comprises a feeder screw, the vehicle rearward end of the feeder screw being connected to the middle column and the feeder screw displacing along the axial line of the lower column in response to rotation of the actuator for telescopic motion.

3. The steering column device according to claim 1, wherein the tilt drive mechanism further comprises a feeder screw, the vehicle rearward end of the screw being pivoted to the upper column and the feeder screw displacing along the axial line of the middle column in response to rotation of the actuator for tilt motion.

4. The steering column device according to claim 1,
wherein the telescopic drive mechanism further includes a feeder screw, the vehicle rearward end of the feeder screw being connected to the middle column and the feeder screw displacing along the axial line of the lower column in response to the rotation of the actuator for telescopic motion, and
wherein the tilt drive mechanism further includes a feeder screw, the vehicle rearward end of the feeder screw being pivoted on the upper column and the feeder screw displacing along the axial line of the middle column in response to the rotation of the actuator for tilt motion.

5. The steering column device according to any one of claim 1 to claim 4, wherein the lower column, the middle column and the upper column are cast in aluminum.

6. The steering column device according to any one of claim 1 to claim 4,
wherein a plurality of clearance elimination mechanisms are provided in the middle column, the clearance elimination mechanisms eliminating a sliding clearance between the bore of the middle column and the guidance tube of the lower column by pressing the outer periphery of the guidance tube of the lower column, and
wherein the position at which each clearance elimination mechanism presses the outer periphery of the guidance tube of the lower column has a different phase on the outer periphery of the guidance tube of the lower column.

7. The steering column device according to claim 6, wherein an angle between adjacent clearance elimination mechanisms positioned to press the outer periphery of the guidance tube of the lower column is 90 degrees.

8. The steering column device according to claim 6, wherein the clearance elimination mechanisms are positioned at respectively different positions along the axial line of the middle column.

9. A steering column device comprising:
a lower column fixable to a vehicle body;
a movable column with a steering wheel rotatably mounted thereon;
a drive mechanism displacing long the axial line of the movable column;
a guidance tube provided in one of the lower column or the movable column;
a bore guided by the guidance tube and provided in the other of the lower column or the movable column; and
a clearance elimination mechanism provided at two different positions of different phase with respect to the bore.

10. The steering column device according to claim 9, wherein the two clearance elimination mechanisms are provided at a relative phase difference of greater than or equal to 0 degrees and less than or equal to 120 degrees.

11. The steering column device according to claim 10, wherein the two clearance elimination mechanisms are provided at a relative phase difference of substantially 45 degrees.

12. The steering column device according to any one of claim 9 to claim 11, wherein the two clearance elimination mechanisms are provided at opposite right and left sides when the steering column device is mounted in the vehicle body.

13. The steering column device according to claim 12, wherein the two clearance elimination mechanisms are provided at symmetrical right and left positions when the steering column device is mounted in the vehicle body.

14. The steering column device according to any one of claim 9 to claim 11, wherein the two clearance elimination mechanisms are provided on only the right side or the left side with reference to the center of the column when the steering column device is mounted in the vehicle body.

15. The steering column device according to any one of claim 9 to claim 11, wherein the two clearance elimination mechanisms are provided on only an upper side or a lower side with reference to the center of the column when the steering column device is mounted in the vehicle body.

16. The steering column device according to any one of claim 9 to claim 15, wherein the two clearance elimination mechanisms are staggered with respect to an axial direction of the column.
